# EUROPEAN PATENT APPLICATION

(11) **EP 1 113 441 A2**
(43) Date of publication of application: **04.07.2001**
(21) Application number: 00127419.0
(22) Date of filing: 14.12.2000
(51) Int. Cl.: G11B 27/10, G11B 27/32, G11B 27/30, H04N 5/782

(54) **Search mode for a D-VHS recorder**

(30) Priority: 27.12.1999 DE 19963189
(71) Applicant: DEUTSCHE THOMSON-BRANDT GMBH, 78048 Villingen-Schwenningen (DE)
(72) Inventor: Engesser, Jürgen, 79843 Löffingen (DE); Eigeldinger, Norbert, 78048 Villingen-Schwenningen (DE)
(74) Representative: Rossmanith, Manfred, Dr.

(57) **Abstract**

The method relates to the search mode in a video recorder according to the helical scan method, in particular in a video recorder in accordance with the D-VHS system standard, which enables both the recording and/or reproduction of analogue and the recording and/or reproduction of digital television signals. The object of this method, in a video recorder whose system standard for digital signal recordings is compatible with the system standard for analogue signal recordings, is to improve the search mode for recorded digital television signals.

According to this method, the search for a recorded digital television signal is carried out with reference to a track-accurate tape position as absolute start position preferably at rewind speed using an evaluation of CTL pulses and, upon reaching the target position or in the vicinity thereof, the search is completed automatically at a significantly lower search speed. In this case, for the search at low speed, the invention makes use of the fact that in the case of recording digital television signals, each individual slanted track is numbered, in which case - in accordance with the D-VHS system standard - the respective track number is arranged in an area of the respective slanted track called a "subcode area".

## Description

The invention relates to a search mode in a video recorder according to the helical scan method, in particular a video recorder in accordance with the D-VHS system standard, which enables both the recording and/or reproduction of analogue and the recording and/or reproduction of digital television signals by means of magnetic tape cassettes.

The D-VHS system has the advantage that it is compatible with the VHS system, in which case (in particular with the recording of CTL (control) pulses in a longitudinal track of the recording medium also for the recording of digital television signals) head drum and tape drive servos can be applied to both systems. In contrast to the VHS system, however, according to which in each case two slanted tracks are provided for recording a frame, recording digital data in accordance with the D-VHS system standard for recovering a frame can encompass in each case up to six slanted tracks.

The consequence of this for signal recordings, however, is that a position to be sought on the recording medium using CTL pulses can be moved to only with an accuracy which is possible on the basis of the CTL pulse frequency and has proved successful for searching for recorded analogue television signals. With regard to recorded digital television signals, however, a greater search accuracy is desirable - particularly when these signals are intended to be edited.

The object of the invention is to improve the search mode in a video recorder for recorded digital television signals, the said video recorder's system standard for digital signal recordings being compatible with the system standard for analogue signal recordings.

This object is achieved by means of a method specified in claim 1 and by means of a video recorder specified in claim 7.

The invention is based on the idea of carrying out the search for a recorded digital television signal with reference to a track-accurate tape position as absolute start position preferably at rewind speed using an evaluation of CTL pulses and, upon reaching the target position or in the vicinity thereof, of automatically completing the search at a significantly lower search speed. In this case, for the search at low speed, the invention makes use of the fact that in the case of recording digital television signals, each individual slanted track is numbered, in which case - in accordance with the D-VHS system standard - the respective track number is arranged in an area of the respective slanted track called a "subcode area".

For ascertaining track-accurate tape positions by reading the slanted track numbering - in each case at the beginning of a search according to the invention and then upon reaching the respective target position or the vicinity thereof - the normal reproduction mode of a video recorder of this type can advantageously be utilized.

Instead of the track numbering - or together with the track numbering - the invention also allows the use of an optional time coding which - in accordance with the D-VHS system standard - is provided either in the "subcode area" or in the "main-code area" of a slanted track.

The invention additionally has the advantages that it manages without marking of CTL pulses and can be realized in conjunction with a microprocessor that is present in any case in video recorders of this type, given appropriate supplementation and/or amendment of the software, and so no additional outlay on circuitry is required.

Further advantages and developments emerge from the description below and from the claims.

The invention is explained in more detail using an exemplary embodiment. In the figures:
- Figure 1: shows a D-VHS video recorder according to the invention;
- Figure 2: shows a speed/time diagram of the search mode according to the invention for this video recorder, and
- Figure 3: shows a flow diagram for the search mode in accordance with Figure 2.

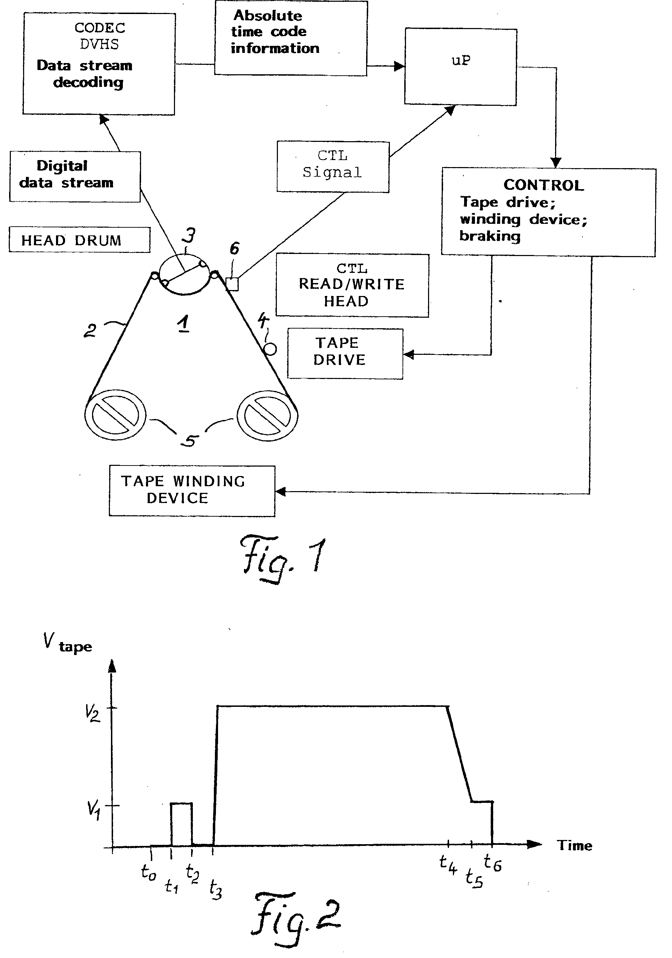

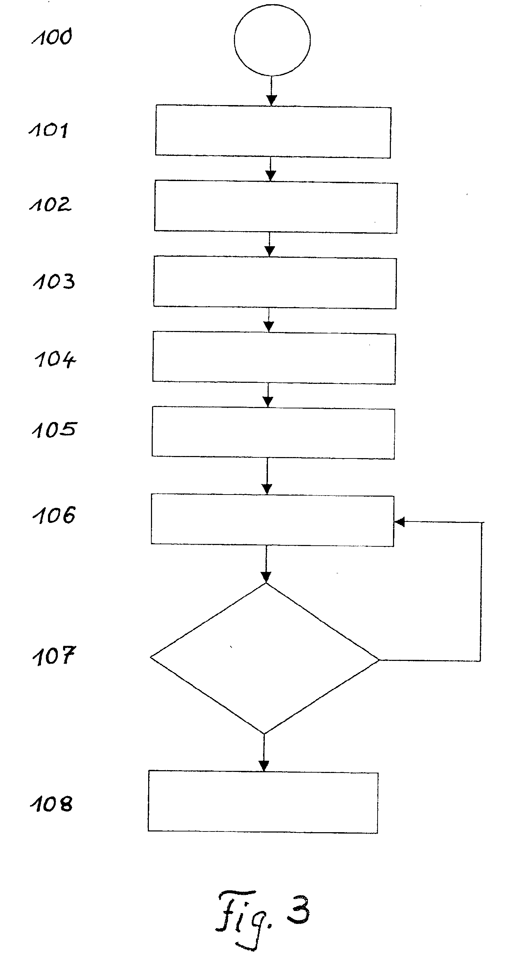

Figure 1 shows a D-VHS video recorder, called apparatus 1 hereinafter, in which blocks and arrows are used to illustrate in a symbol-like manner the elements and signals which are essential to the invention, in which case - in a manner known per se - a recording medium in tape form for digital television signals, called tape 2 hereinafter, which is mounted in a cassette (not illustrated) has been drawn out of the cassette and is in engagement with a head drum 3, in order to be scanned by means of rotating read/write heads. Means which are known per se are used for driving tape 2 (by means of capstan 4, head drum 3, and tape reels 5) and for the respective control of head drum and tape drives and tape winding device. Therefore, these means will be discussed only in so far as is necessary for explaining the search mode according to the invention. The search mode is described below with reference to diagrams (Figure 2 and Figure 3).

Figure 2. diagrammatically shows the speed characteristic vₜₐₚₑ of the tape 2 as a function of the time t in the apparatus operating mode "search" for a recorded digital television signal. According to the invention, this search can be broken down into a plurality of successive time periods or steps:

In a first time period t₀-t₁, a remote control (not illustrated) or the apparatus control device is used to input a stop time which is intended to correspond to the picture content to be sought, or to a predetermined slanted track.

In a second time period t₁-t₂, the "reproduction" apparatus operating mode is used to determine a tape position as start position for the actual search, by determining the number of an arbitrary slanted track. This may be e.g. that slanted track whose number is detected first. In accordance with the D-VHS system standard, this slanted track can be assigned a corresponding CTL pulse in the CTL signal, which, in a manner known per se, is read by a stationary CTL read/write head 6 and fed to a microprocessor µP for evaluation. According to the invention, the said CTL pulse is utilized as reference signal for the start position of the actual search, which is intended to be characterized by acceleration of the tape transport to a relatively high speed v₂ (at the instant t₃), holding of the tape transport at this speed v₂ (corresponding to a fourth time period t₃-t₄), deceleration of the tape transport to a relatively low speed v₁ (corresponding to a fifth time period t₄-t₅) and moving to the target position at this tape transport speed v₁ (corresponding to a sixth time period t₅-t₆). In this case, the high speed v₂ is preferably intended to correspond to the customary rewind speed in video recorders.

Thus, as soon (i.e. at the instant t₂) as a slanted track has been detected using the slanted track numbering, the microprocessor µP stops the tape drive and carries out (in the third time period t₂-t₃) a calculation for the actual search, corresponding control data of the apparatus 1 being determined up to the stop position at the end of the search according to the invention.

As mentioned above, however, the actual search for its part encompasses the fourth, fifth and sixth time periods, in the fourth time period t₃-t₄ the tape 2 being moved at the correspondingly high speed v₂ relative to the "reproduction" apparatus operating mode. The fifth time period t₄-t₅ is arranged in the vicinity of the target position of the search according to the invention and is characterized by deceleration of the tape transport to the speed v₁, which is practically intended to correspond to the tape speed in the "reproduction" apparatus operating mode. The deceleration can be carried out by means of the braking device of the apparatus 1 and/or by a changeover to the "reproduction" apparatus operating mode.

By virtue of this reduction in the speed at which the tape 2 is now transported from one tape reel 5 to the other tape reel 5, the slanted track numbering becomes readable, with the result that track-accurate moving to the target position is ultimately achieved - by means of evaluating the slanted track numbering.

A coding/decoding device called a CODEC is used for decoding the digital data stream (in the sixth time period t₅-t₆ and also already in the second time period t₁-t₂). The decoded data stream is fed to the microprocessor µP for evaluation of the data relevant to the search according to the invention and signal processing resulting from this in conjunction with corresponding controls of the devices of the apparatus 1 which are involved in the sequence of the search mode according to the invention.

A time window or the like is preferably provided for the beginning of the deceleration from the speed v₂ to the speed v₁.

With regard to the beginning for deceleration, a function for a residual tape determination that is provided in any case in the apparatus 1 can advantageously be used for an error correction: e.g.-depending on the realized embodiment of the apparatus with regard to the search mode according to the invention - in the case of counting errors with regard to the CTL pulse train, on account of counting errors of a tape counter connected to the tape winding device and/or on account of so-called "dropout" points on the tape 2, which do not permit any recording and hence any detection of CTL pulses.

In the case where, with the recording of a digital television signal, a corresponding time coding is assigned to the respective slanted tracks (as provided e.g. in accordance with the D-VHS system standard), the time code of an arbitrary slanted track which can be detected first is preferably used as start position for the search according to the invention during the first time period t₀-t₁, in order then to control the actual search during the fourth time period t₃-t₄ by means of the microprocessor µP, preferably by counting successive CTL pulses.

In the case where, with the recording of a digital television signal, no corresponding time coding should be assigned to the respective slanted tracks, the number of the slanted track detected first during the first time period t₀-t₁ is preferably used as start position for the search according to the invention, in order then to control the actual search during the fourth time period t₃-t₄ by means of the microprocessor µP, by counting successive CTL pulses.

With regard to further embodiments, instead of counting successive CTL pulses during the fourth time period t₃-t₄, it is also possible to use the respective tape counter that is customary in apparatuses 1 of this type.

Figure 3 illustrates the search mode according to the invention performed by the apparatus 1 using a flow diagram.

After the start in accordance with block 100 (e.g. by actuation of a corresponding key on the remote control of the apparatus), in accordance with block 101 (e.g. upon actuation of corresponding further keys on the remote control of the apparatus) the stop time for the search is specified, which is intended to correspond to the picture content to be sought, or to a predetermined slanted track. In accordance with block 102, the "reproduction" apparatus operating mode is used to effect processing of the digital data stream read by the head drum 3, in order, in accordance with block 103, to determine a tape position as start position for the actual search, the time code of an arbitrary slanted track which is detected first preferably being determined as start position or start time for the actual search. As soon as the time code has been determined, in accordance with block 104 the tape drive is stopped in order to calculate the number of CTL pulses which is necessary until the deceleration of the tape transport in the vicinity of the target position from the speed v₂ to the speed v₁. As soon as this number of CTL pulses has been determined, in accordance with block 105 the actual search is started by the tape transport being accelerated to the speed v₂, which, for example, may at the same time be the speed provided for the rewind mode of the apparatus 1. In accordance with blocks 106 and 107, detected CTL pulses are counted in conjunction with continuous evaluation of the instantaneous counting result, in which case - as is intended to be illustrated by the return to block 106 - the tape transport speed v₂ is maintained until correspondence with the value calculated in block 104 is ascertained.

With correspondence having been ascertained, in accordance with block 108 the tape transport speed v₂ is reduced by deceleration to the tape transport speed v₁ corresponding to the "reproduction" apparatus operating mode, with the result that the slanted track numbering becomes readable in order then to move to the target position with track accuracy by means of evaluating the slanted track numbering.

## Claims

1. Method for controlling the search mode by means of tape transport control in a video recorder (1) according to the helical scan method, in particular in a video recorder in accordance with the D-VHS system standard, which enables both the recording and/or reproduction of analogue and the recording and/or reproduction of digital television signals in slanted tracks of a recording medium, numbering of the slanted tracks and longitudinal track recording of CTL pulses being provided with the recording of digital television signals, **characterized in that** the search mode for digital television signals is carried out using an evaluation of the slanted track numbering in conjunction with the evaluation of successive CTL pulses which have been recorded during the recording of the digital television signals, by the search mode having the following successive steps:
a) inputting of a stop time of the search,
b) determination of a tape position as start position by reading the slanted track numbering at a tape transport speed v₁,
c) acceleration of the tape transport to a tape transport speed v₂ by means of a tape winding device,
d) control of the tape transport by reading and evaluating successive CTL pulses with reference to the start and/or target position,
e) reduction in the tape transport speed v₂ in the vicinity of the target position to the tape transport speed v₁, and
f) control of the search by reading and evaluating the slanted track numbering until the target position is reached.

2. Method according to claim 1, **characterized in that** the evaluation of CTL pulses is effected by counting successive CTL pulses.

3. Method according to claim 2, **characterized in that** the evaluation of CTL pulses can be checked using a function for a residual tape determination that is provided in the recorder.

4. Method according to claim 3, **characterized in that** miscounts caused by CTL failure are corrected using the tape remainder determination.

5. Method according to one or more of the preceding claims 1 to 4, **characterized in that** the difference between the slanted track number provided as start position and the slanted track number provided as target position is converted into a CTL pulse train.

6. Method according to claim 5, **characterized in that** the CTL pulse train can be converted into a relative search duration in which the start position is used as absolute start time.

7. Video recorder according to the helical scan method, which enables both the recording and/or reproduction of analogue and the recording and/or reproduction of digital television signals in slanted tracks of a recording medium, numbering of the slanted tracks and longitudinal track recording of CTL pulses being provided with the recording of digital television signals, **characterized in that** the video recorder (1) has a search mode for digital television signals which is carried out using an evaluation of the slanted track numbering in conjunction with the evaluation of successive CTL pulses which have been recorded during the recording of the digital television signals, by the search mode having the following successive steps:
a) inputting of a search stop time by means of a remote control of the apparatus or a control device of the apparatus,
b) determination of a tape position as start position by reading the slanted track numbering at a tape transport speed v₁ by means of read/write heads arranged on a rotating head drum (3) in the reproduction mode of the apparatus (1),
c) acceleration of the tape transport to a tape transport speed v₂ by means of a tape winding device of the apparatus (1),
d) control of the tape winding arrangement of the recorder by means of control and evaluation means (µP) by reading and evaluating successive CTL pulses using a stationary read/write head (6) with reference to start and target positions,
e) reduction in the tape transport speed v₂ in the vicinity of the target position to the tape transport speed v₁ by means of the control and evaluation means (µP), and
f) control of the search by means of the control and evaluation means (µP) by reading and evaluating the slanted track numbering until the target position is reached.
